# EUROPEAN PATENT SPECIFICATION

(11) **EP 1 772 034 B1**
(45) Date of publication and mention of the grant of the patent: **12.08.2015**
(21) Application number: 04749108.9
(22) Date of filing: 30.06.2004
(51) Int. Cl.: H04W 16/28, H01Q 1/24, H01Q 25/00

(54) **ANTENNA BEAM SHAPE OPTIMIZATION**
ANTENNENSTRAHL-FORMOPTIMIERUNG
OPTIMISATION DE LA FORME D'UN FAISCEAU D'ANTENNE

(43) Date of publication of application: 11.04.2007
(73) Proprietor: Telefonaktiebolaget L M Ericsson (publ), 164 83 Stockholm (SE)
(72) Inventor: HAGERMAN, Bo, SE-135 52 Tyresö (SE); OVESJÖ, Fredrik, SE-125 43 Älvsjö (SE); JOHANNISSON, Björn, Gunnar, SE-434 31 Kungsbacka (SE); HILTUNEN, Kimmo, SE-118 26 Stockholm (SE)
(74) Representative: Ericsson
(86) International application number: PCT/SE2004/001070
(87) International publication number: WO 2006/004463

(56) References cited:
- WO-A1-2004/004148
- US-A1- 2003 114 196
- US-B1- 6 311 068
- US-B1- 6 388 615

## Description

### TECHNICAL FIELD

The present invention generally relates to directional antenna units in radio communications systems, and in particular to optimizing the antenna beam shape of directional antenna units in such systems.

### BACKGROUND

Traditionally, in radio communications systems a number of base stations or radio base stations with associated antenna units are arranged for providing the relevant radio coverage of the system. Such an antenna unit is then responsible for enabling communications services to mobile units positioned within its associated radio coverage area. In the art, so-called omnidirectional antenna units can be arranged in a base station for providing general radio coverage around the base station. However, directional or sectored antenna units covering different sectored areas with different main point directions are often used in conjunction with the base stations. Thus, in such a case, multiple directional antennas can be arranged in a given base station, where each such directional antenna provides radio coverage within a sector or cell of the total radio coverage area associated with the base station.

Today, the beam sector shape of a directional antenna is typically characterized by two antenna parameters: the gain of the antenna and the 3 dB beam width of the beam sector of the antenna. Either these parameters are fixed for a given antenna arrangement or the including elements of the antenna can be adjusted to manipulate the antenna gain and/or beam width.

In order to enable seamless movement of a mobile unit between different cells during a communications session, the radio coverage areas of neighboring cells typically, at least partly, overlap, see for instance WO-A1-2004/004148. Such an overlapping coverage area is denoted handover area or region in the art. In the handover area, a handover procedure may generally be triggered and executed for a mobile unit, which could result in that a new radio communications link to the destination cell (more correctly to the antenna unit associated with the cell) is established and then the old radio link to the source cell is abandoned.

However, the handover area of directional antenna units of a base station according to the prior art is not optimal in the sense of enabling completion of handover procedures and minimizing any interference and communications overhead. The sole choice, if any, of prior art arrangements in changing the antenna beam shape of two neighboring directional antenna units and, thus, affect handover area is to adjust the antenna gain and/or beam width. However, performing such antenna adjustments will typically either result in a too small overlapping region (by reducing the beam width and possibly increasing the gain) or a too large overlapping region (by increasing the beam width, possibly at expense of the antenna gain). In the former case, due this too small handover area, the handover procedure for a mobile unit will not be completed until the radio conditions deteriorate, resulting in dropping the ongoing communications session. In the latter case, the signal energy of the neighboring antenna units will overlap over a large area resulting in interference problems and poor utilization of the signal energy.

### SUMMARY

The present invention overcomes these and other drawbacks of the prior art arrangements.

It is a general object of the present invention to provide an adjustment and optimization of the antenna beam shape of a directional antenna in a radio communications system.

It is another object of the invention to provide a differential shape adjustment of antenna beam sectors of the antenna beam shape of a directional antenna

Yet another object of the invention is to provide an antenna beam shape that minimizes handover overhead.

These and other objects are met by the invention as defined by the accompanying patent claims.

Briefly, the present invention involves adjusting and optimizing the shape of the antenna beam of a directional antenna in a communications system. According to the invention, the total antenna beam of the directional antenna is divided into multiple beam sectors. A differential shape optimization is performed on these beam sectors using different optimization objects and requirements.

In a first embodiment of the invention, at least a handover beam sector and main beam sector of the antenna beam are defined. The shape of the handover beam sector is then optimized based on the handover parameter setting in the radio communications system. In other words, this handover beam sector shape is adjusted based on the value of at least one handover parameter used in performing handover procedures, preferably intra-site or softer handover procedures, in the system. This parameter based shape optimization can be realized by providing an angular interval of this handover beam sector larger than a first angular threshold. The value of this angular threshold is determined based on the handover parameter settings in the system. Thus, the angular size of this handover beam sector will be adapted to (intra-site) handover requirements and the threshold value is chosen to allow triggering and completion of a handover procedure for a mobile unit crossing the handover beam sector. Alternatively, or in addition, the provided antenna gain in this handover beam sector exceeds a minimum gain threshold, the value of which is determined based on the handover parameter settings. Optionally, the main beam sector can be optimized by maximizing the antenna gain in this beam sector.

The handover beam sector can be defined as the portion of the antenna beam of the directional antenna in which the difference in received signal levels associated with the directional antenna and with a neighboring directional antenna, the radio coverage of which partly overlaps the radio coverage of the antenna in beam sector, is smaller than a first threshold. Furthermore, the received signal levels within this handover beam sector preferably also exceeds a second threshold. The values of the first and second threshold are then preferably determined based on the handover parameter setting. The relevant received signal level can either be determined by the directional antenna (or the neighboring antenna) based on measurements on data transmitted by a mobile unit. Alternatively, the mobile unit determines the signal level based on measurements on data transmitted by the directional antenna (or the neighboring antenna). In such a case, the mobile unit transmits a notification of the signal levels to the respective directional antenna.

In other embodiments, the antenna beam of the directional antenna is divided into more than two different beam sectors. For example, the handover and main beam sector may be complemented with a high intra-site interference beam sector and/or a detection and handover preparation beam sector. In such a case, the shape of the handover and main beam sectors may be optimized as discussed above. The interference beam sector is optimized by minimizing its angular interval. Correspondingly, the shape of the detection beam sector is adjusted by providing its angular interval larger than a second angular interval. Thus, the angular size of the detection beam sector is adjusted to be large enough for a controlled detection and handover preparation of a mobile unit moving into the handover beam sector.

In a preferred embodiment, the detection beam sector is defined as the portion of the antenna beam of the directional antenna outside of the handover beam sector and in which the received signal level of the antenna exceeds a third threshold. Furthermore, the interference beam sector can then be defined as positioned outside of this detection beam sector and where the received signal level exceeds an interference impact level. The remaining portion of the antenna beam is then the main beam sector.

The invention offers the following advantages:
- Allows optimization of the shape of the antenna beam of a directional antenna based on handover parameter settings and enhances the handover operation in a communications system;
- Minimizes the required communication overhead;
- Minimizes the number of required handovers in the system, further yielding minimized RNC load; and
- Increases communications system stability.

Other advantages offered by the present invention will be appreciated upon reading of the below description of the embodiments of the invention.

### SHORT DESCRIPTION OF THE DRAWINGS

The invention together with further objects and advantages thereof, may best be understood by making reference to the following description taken together with the accompanying drawings, in which:
Fig. 1 is a schematic overview of a portion of a communications system, to which the teachings of the present invention can be applied;
Fig. 2 is a flow diagram illustrating an embodiment of a method of optimizing antenna beam shape according to the present invention;
Fig. 3 is a flow diagram illustrating another embodiment of a method of optimizing antenna beam shape according to the present invention;
Fig. 4 is a flow diagram illustrating additional steps of the optimization method of Fig. 3;
Fig. 5 is an antenna diagram illustrating an example of two neighboring antenna beams adjusted according to the optimization method of Fig. 3;
Fig. 6 is an antenna diagram illustrating another example of two neighboring antenna beams adjusted according to the optimization method of Fig. 3;
Fig. 7 is a flow diagram illustrating a further embodiment of a method of optimizing antenna beam shape according to the present invention;
Fig. 8 is a flow diagram illustrating additional steps of the optimization method of Fig. 7;
Fig. 9 is an antenna diagram illustrating an example of two neighboring antenna beams adjusted according to the optimization method of Fig. 7;
Fig. 10 is a flow diagram illustrating yet another embodiment of a method of optimizing antenna beam shape according to the present invention;
Fig. 11 is a flow diagram illustrating additional steps of the optimization method of Fig. 10;
Fig. 12 is an antenna diagram illustrating an example of two neighboring antenna beams adjusted according to the optimization method of Fig. 10;
Fig. 13 is a magnification of a portion of the antenna diagram illustrated in Fig. 12;
Fig. 14 is a schematic block diagram illustrating an antenna beam adjusting unit according to the present invention;
Fig. 15 is a schematic block diagram illustrating the beam shape defining unit of Fig. 14 in more detail; and
Fig. 16 is a schematic block diagram illustrating the antenna beam optimizing unit of Fig. 14 in more detail.

### DETAILED DESCRIPTION

Throughout the drawings, the same reference characters will be used for corresponding or similar elements.

The present invention relates to directional antennas in radio communications systems and in particular to optimizing and adjusting the antenna beam shape of such directional antennas.

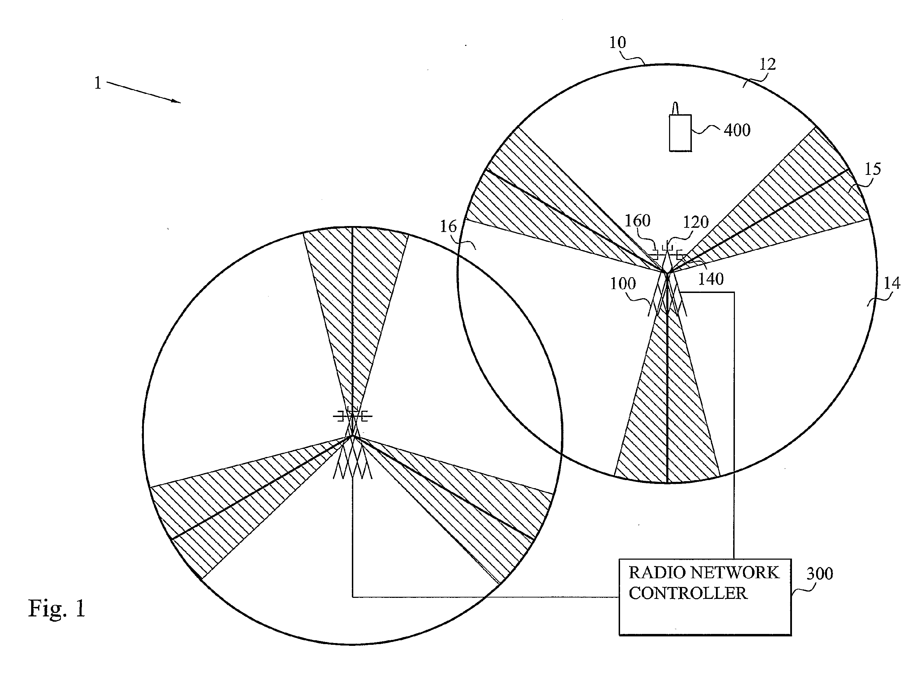

Fig. 1 is a schematic overview of a portion of a radio communications system 1, to which the teachings of the present invention can be applied. In Fig. 1 only arrangements and units directly involved in the invention are shown in order to simplify the illustration. The present invention can typically be applied to different types of communications systems 1 including a GSM (Global System for Mobile communications) system, different CDMA systems, e.g. a WCDMA (Wideband CDMA) system, a Time Division Multiple Access (TDMA) system, a Frequency Division Multiple Access (FMDA) system or any other radio communications systems utilizing whatsoever multiple access method, e.g. an Orthogonal Frequency Division Multiple Access (OFDMA) system.

The radio communications system 1 comprises a number of radio base stations (RBSs) or base station transceivers 100, of which only two are illustrated in the figure. The RBS 100 enables utilization of communications services within its provided radio coverage area 10. In the figure, the RBS 100 has been illustrated with multiple associated directional antenna units 120, 140, 160 that provides radio coverage in different sectors or cells 12, 14, 16 of the total radio coverage area 10 of the site where the base station 100 is located. The RBS 100 can include three directional antenna units 120, 140, 160 with different main directions as is illustrated in the figure. However, the present invention can also be applied for another base station configuration that includes multiple, i.e. at least two, directional antennas, e.g. 2, 3, 4, 6, 9 or 12 directional antennas.

The directional antennas 120, 140, 160 could be configured for together providing total radio coverage 10 within a general area surrounding the RBS 100, e.g. a circular, hexagonal or star-shaped area. However, it is also possible that the total coverage area 10 of the directional antennas 120, 140, 160 arranged in a RBS 100 only constitutes a portion or sector of a general area. For example, if the directional antenna 160 is omitted, no radio coverage will be provided by the RBS 100 within the area denoted 16. This may be the case when the network operator is not interested in providing radio coverage and, thus, communications services within certain areas that may e.g. include large mountains or other objects, rendering the area inaccessible for the users of mobile units 400. In either way, neighboring cells 12, 14 associated with the RBS 100 or site preferably partly overlaps 15 in order to enable a seamless movement of a mobile unit 400 with an ongoing communications session.

In order to simplify the understanding of the present invention a short discussion of intra-site or softer handover procedures as exemplified by a WCDMA radio communications system 1 follows. A mobile unit 400 is, for example, currently positioned in the source cell 12 and has a communications link to the directional antenna 120 associated with this cell 12. The mobile unit 400 then starts to move towards the destination cell 14 managed by the neighboring directional antenna 140 of the same site. The mobile unit 400 also intermittently or periodically performs signal quality measurements of communications channel(s) in the so-called active set. This active set includes those cells 12 to which the mobile unit 400 currently is connected. The mobile unit 400 preferably also measures signal quality of communications channels in the so-called candidate set. This candidate set includes neighboring cells 14, 16 to the cell(s) 12 in the active set. These signal quality measurements are then reported to a central unit connected to and managing the base stations 100, represented by a radio network controller (RNC) 300 in the figure. The RNC 300 then verifies, based on the received measurement data, whether a handover procedure should be triggered and executed for the mobile unit 400.

As the mobile unit 400 moves from the source cell 12 towards the destination cell 14, the signal quality of the communications channel (L₁₂) from the source directional antenna 120 will deteriorate whereas the corresponding quality of the channel (L₁₄) from the destination directional antenna 140 will improve. Eventually, the mobile unit 400 will enter the handover area 15 where the radio coverage of the two neighboring cells 12, 14 overlap and the signal quality of the L₁₄ channel will be larger than the quality of the L₁₂ channel subtracted with a first handover parameter or threshold. At this instant a handover procedure is triggered, which will result in establishing a communications link between the source directional antenna 140 and the mobile unit 400 and adding the destination cell 14 to the active set. During the continuos movement of the mobile unit 400, the quality of the L₁₄ channel will exceed the corresponding quality of the L₁₂ channel so that the destination cell 14 will now be the best serving cell. Eventually, the quality of the L₁₂ channel will fall below the quality of the L₁₄. channel subtracted by a second handover parameter. Another handover procedure will then be triggered resulting in deleting the source cell 12 from the active set and dropping the communication link (L₁₂) to that cell 12.

For a radio communications system there is typically several different handover-related triggering events or conditions in addition to the two above-identified events, i.e. radio link addition and radio link deletion. Further such events could be that one cell leaves and one cell enters reporting range (replacement of cells in the active set) and change of a best serving cell, i.e. a new cell is now measured with the highest signal quality. Generally, each such handover event is associated with a handover parameter that is used together with signal quality data for determining when the event should be triggered. These different handover parameters form the handover parameter settings of the radio communications system 1. It could be possible that the same parameter settings are used for all RBS 100 in the system 1. Alternatively, different handover parameter settings can be employed by different RBS 100 and/or different directional antennas 120, 140, 160. The values of these parameters are typically determined by the network operator and can be communicated to the RBS 100 and directional antennas 120, 140, 160 by the RNC 300. A more detailed discussion of handover events and conditions is found in the 3GPP document [1].

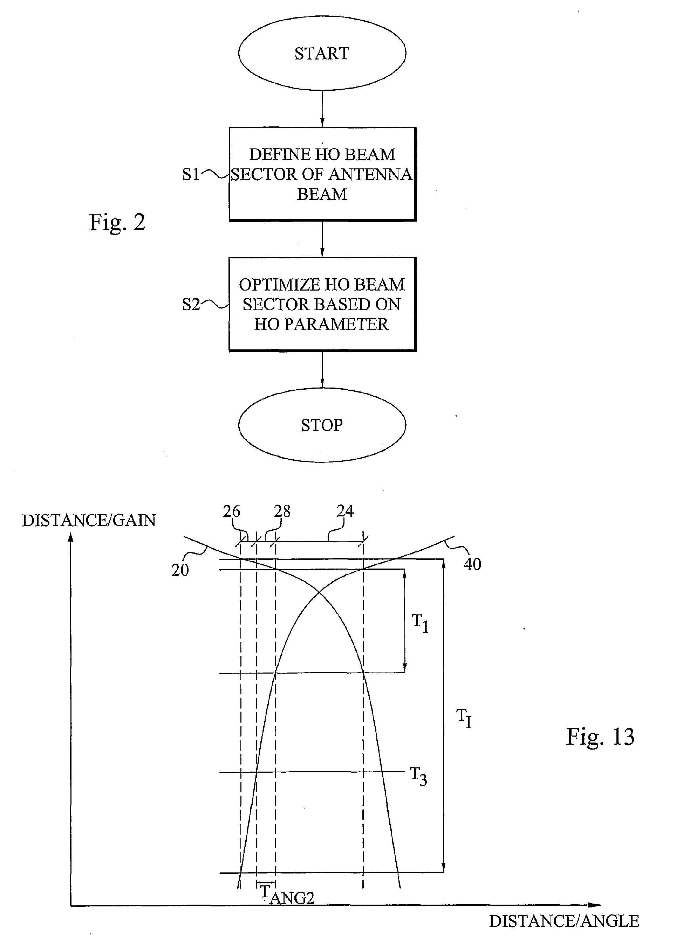

Fig. 2 is a flow diagram illustrating an embodiment of the method of optimizing the antenna beam shape of a directional antenna according to the present invention.

The method starts in step S 1 where a first or handover related beam sector of the total antenna beam of the directional antenna is defined. This handover beam sector constitutes the portion of the beam sector lying in the handover region, or a portion thereof. Briefly returning to Fig. 1, the handover beam sector of the directional antenna 120 constitutes the portion of the antenna beam 12 positioned in the (hatched) handover area 15 or in a portion thereof. In a next step S2, the beam shape of this handover beam sector is adjusted or optimized based on the handover parameter settings of the communications system. If different parameter values are employed for different RBS and/or directional antennas in the system, the optimization of the handover beam shape is preferably performed based on the particular handover parameter setting of its associated base station and/or directional antenna. The method then ends.

Thus, according the present invention the radio coverage area or antenna beam of a directional antenna is divided into multiple, i.e. at least two, beam sub-sectors. The shape of these sub-sectors is then adjusted differently based on different requirements. This should be compared to prior art solutions, where merely the total gain and/or beam width of a directional antenna, if any, may be adjusted. However, in the invention it is recognized that the different portions of the antenna beam of a directional antenna typically have different requirements in form of shape, gain, etc. By then performing a differential optimizing of the sub-sectors in the total antenna beam of the directional antenna, the requirements of the different sub-sectors may be regarded in the shape optimization. For example, the handover beam sector is optimized with regard to the handover parameter settings, e.g. based on the current value of one or multiple handover parameters employed for the directional antenna. This allows optimization of the radio coverage in the handover area, or at least in a portion thereof, based on the current handover parameter settings.

The sub-sector definition and optimization of sub-sector shape offer several advantages including adjustment of the size of the intra-site handover area between two cells. This size adjustment will then result in a handover area that is large enough to allow completion of handover procedure for a moving mobile unit before the link quality of the old communications link deteriorates so much that this link will be lost or dropped before a new communications link is established. However, the area will not be too large so that multiple links are simultaneously and unnecessarily present for a mobile unit, thus, resulting in poor utilization of the (limited) communications resources. The optimization of the handover beam sector and, thus, the handover region will also minimize the required communication overhead, i.e. minimize the number of required handovers in the system, further yielding minimized RNC load. Taken together this may result in increased system capacity and still fulfilling area coverage and mobility requirements.

It is anticipated by the invention that in practice optimization may, due to limitations of the involved equipment and units, not reach the ideal 100 % optimal state or result (sub-optimization). Thus, the optimization according to the invention is performed under such equipment limitation conditions, but still provides a major advantageous effect compared to the prior art single overall adjustment of the total antenna beam shape of a directional antenna.

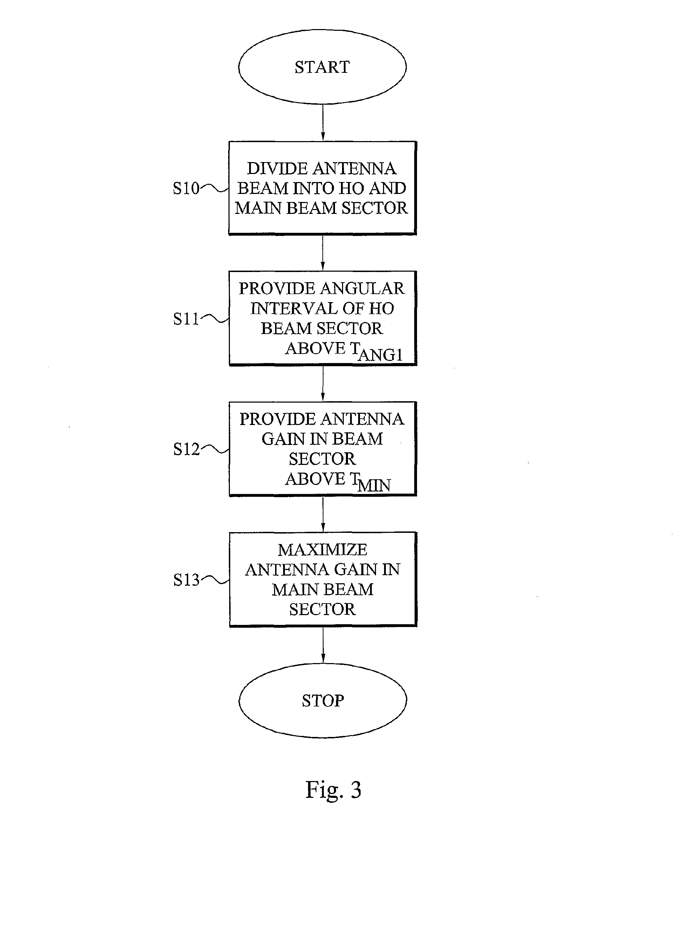

Fig. 3 is a flow diagram of another embodiment of the method of optimizing the antenna beam shape of a directional antenna according to the invention. The method starts in step S10 where the antenna beam of the directional antenna is divided into at least the handover beam sector and a second or main beam sector. The shape of these two beam sectors are then optimized using different criteria. In step S11, the shape of the handover beam sector is adjusted according to a first embodiment of the invention by providing an angular interval of this handover beam sector larger than a first angular threshold. The value of this angular threshold is determined based on the handover parameter settings in the system. Thus, the angular size of this handover beam sector will be adapted to (intra-site) handover requirements and the threshold value is chosen to allow triggering and completion of a handover procedure for a mobile unit crossing the handover beam sector. In the next step S12, the shape of the handover beam sector is optimized according to a second embodiment by providing a minimum antenna gain of the directional antenna in this handover beam sector. Thus, the antenna gain in the beam sector should exceed a minimum threshold, the value of which is determined based on the handover parameter settings in the system. The first and second embodiments of the invention illustrated in steps S11 and S12, respectively, are preferably combined so that the angular interval of the handover beam sector exceeds the angular threshold and the antenna gain in this sector exceeds the minimum threshold. In the final step S13, the shape of the, main beam sector is optimized or adjusted. This optimization is performed by maximizing the antenna gain of the directional antenna in this main beam sector. The method then ends.

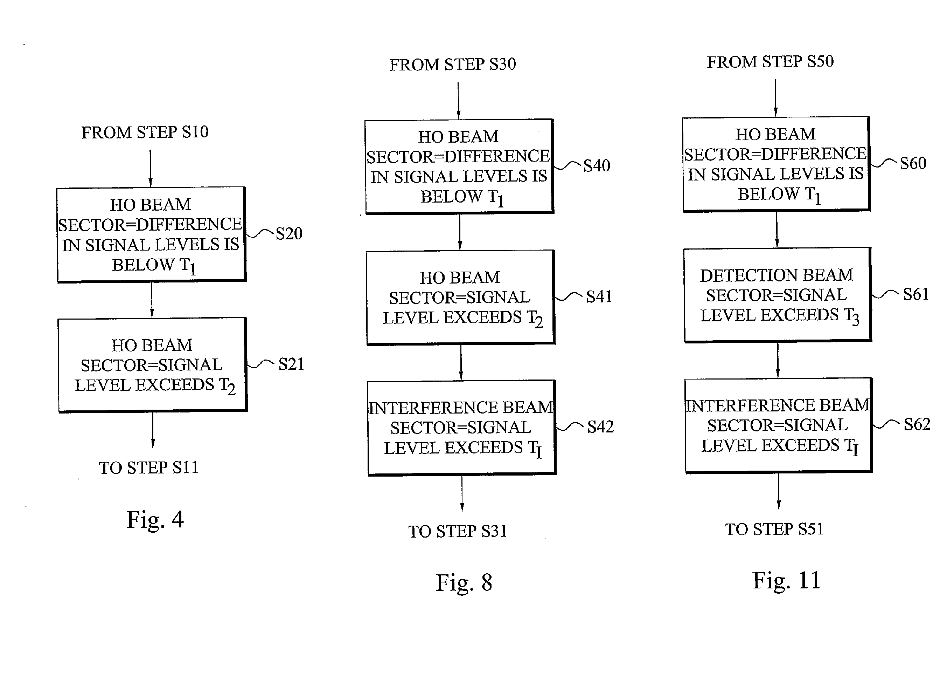

Fig. 4 is a flow diagram illustrating additional steps of the method of Fig. 3 for defining the handover beam sector of the antenna beam. The method continues from step S10 in Fig. 3. As was discussed above in connection to Fig. 1, the antenna beam of a first directional antenna often partly overlaps with the corresponding antenna beam of a second neighboring directional antenna. Then in a next step S20, the handover beam sector is defined as that portion of the antenna beam where the difference in received signal level for the directional antenna and for its neighboring antenna in the handover beam sector is smaller than a first threshold T₁.

The relevant signal level is in a first embodiment, the signal strength level as measured by the directional antenna. This signal level is measured and determined based on data transmitted by a mobile unit and received by the antenna. In a second embodiment, the received signal level is determined by the mobile unit and reported to the directional antenna(s). Thus, in this embodiment, it is the directional antenna(s) that transmit(s) data that is received and measured by the mobile unit. In either case, as is known in the art, the received signal level generally declines for larger radio distances from the signal source, e.g. the directional antenna or mobile unit. Thus, for the directional antenna, the received signal level declines for larger radio distances from the antenna towards the border of the cell edge, in particular for the angular movement towards the cell border. This radio distance reflects the power loss moving away from the signal source. Note that two points with same radio distance from the source do not necessarily have to have the same geographical distance to that signal source. Mountains, buildings and similar objects may partially block or reduce the signals as received by the receiving unit, leading to a larger propagation loss in some directions.

In the next optional step S21, the received signal level for the directional antenna (either as measured by the antenna itself or as measured by the mobile unit and received therefrom) and preferably also for the neighboring directional antenna should exceed a second threshold T₂. The portion of the antenna beam which does not fulfill these two conditions is then defined as the main beam sector. The method then continues to step S11 of Fig. 3.

The values of the first T₁ and second T₂ thresholds are preferably determined by the handover parameter settings used in the system. A single or multiple handover parameters may be used in determining the values of T₁ and T₂. Furthermore, the same handover parameter(s) or different parameters can be used in generating the two thresholds T₁ and T₂.

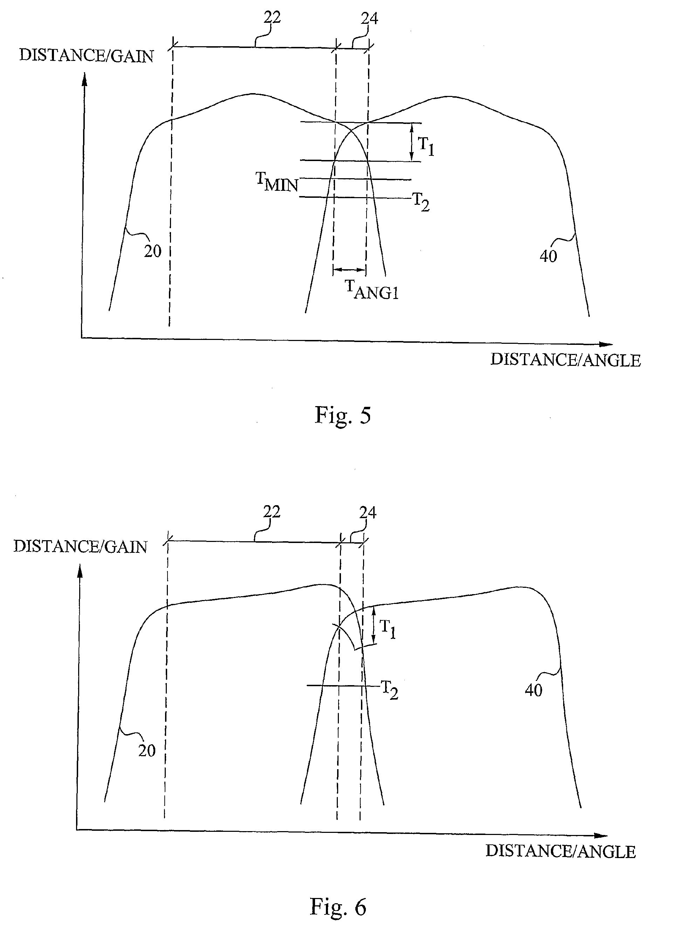

Fig. 5 is an antenna diagram illustrating the antenna beam or radio coverage 20, 40 of two neighboring directional antennas arranged in a RBS. The antenna beams 20, 40 of these antennas have been optimized by the embodiment of the invention discussed in connection to Fig. 3 above. Thus, the antenna beam 20 of the directional antenna is (virtually) divided into at least a handover beam sector 24 and a main beam sector 22. In cases where the base station, in which the directional antenna is arranged, provides radio coverage in a general area, a corresponding antenna beam will be provided left of the beam 20 in the figure. In such a case, the antenna beam 20 will include a first handover beam sector 24, the main beam sector 22 and a second handover beam sector (not illustrated). However, it could be possible that the base station only provides radio coverage within a portion of a surrounding area so that the antenna beam 20 and its directional antenna only has a single neighboring beam 40 and directional antenna, respectively, of the same base station, as is illustrated in the figure. In such a case, the main beam sector 22 could constitute the remaining portion of the beam sector 20 in addition to the handover beam sector 24.

As is illustrated in the figure, within the handover beam sector 24, the difference in received signal level of the two neighboring directional antennas is smaller than the first threshold T₁. Furthermore, the received signal level of the directional antenna and preferably also of the neighboring directional antenna is above the second threshold T₂ in this handover beam sector 24.

In order to maximize the performance of the radio communications system and minimize the overhead communication, the antenna beam sector shape or pattern and the handover parameter settings and, thus, the thresholds T₁ and T₂ should be optimized so that the angular interval of the handover beam sector 24 is larger than the first angular threshold T_{ang1}. This will result in a handover beam sector size that is sufficiently large for a controlled handover of a moving mobile unit. In addition, the antenna gain of the directional antenna exceeds the minimum gain threshold Tₘᵢₙ in the handover beam sector 24. The value of the threshold T₁ is as small as possible, while the received signal levels in the beam sector 24 are as high as possible over the threshold T₂. Furthermore, the antenna gain in the main beam sector 22 is preferably maximized.

As is evident from the antenna diagram of Fig. 5, in this embodiment of the invention, the resulting optimization of different sub-sectors 22, 24 of the antenna beam 20 of the directional antenna will generate an overall beam shape that differs from the general smooth "cosine-shape" or "tear-shape" of prior art antennas. Instead, according to the invention, the radio coverage in the handover beam sector 24 is typically larger than for prior art solutions, which will result in the "knee-shaped" appearance of the antenna beam 20 in this beam sector 24. Thus, some of the "available" antenna energy or gain of the directional antenna has generally been redistributed from the main sector 22 to the handover beam sector 24 compared to prior art solutions.

Fig. 6 is an illustration of another antenna diagram of two directional antenna beams 20, 40 optimized according to the present invention. In this embodiment the antenna beam 20, 40 has an asymmetric shape with a maximum gain (radio coverage) in or close to the handover beam sector 24. As one follows the antenna beam 20 from the handover beam sector 24 and maximum gain, into the main beam sector 22 the received signal energy (maximum radio distance) will gradually decline. However, entering the handover beam sector 24 or the other end of the beam sector (which may be a second handover beam sector or constitute a portion of the main beam sector), the maximum allowable radio distance will fall rapidly per traveled distance in order to reduce interference with adjacent cells and not spreading the signal energy of the directional antenna far into neighboring cells.

Similar to Fig. 5, the received signal level in the handover beam sector 24 exceeds a second threshold T₂ and the difference in received signal level of the two neighboring directional antennas in this handover beam sector 24 is smaller than a first threshold T₁. The values of the respective thresholds T₁ and T₂ are determined based on the settings of the handover parameters of the system, as was discussed above.

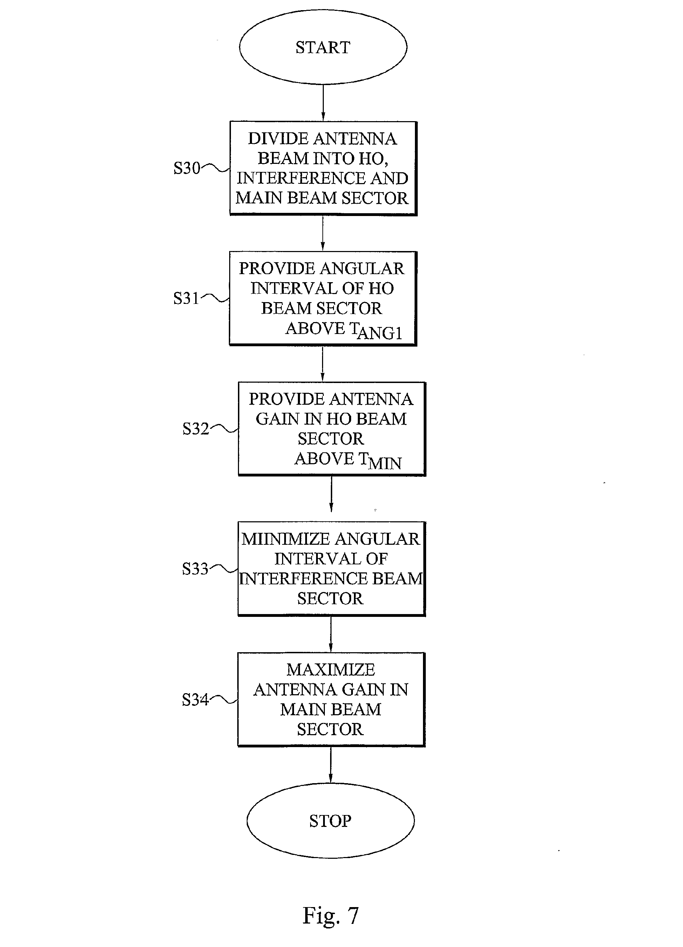

Fig. 7 is a flow diagram of yet another embodiment of the method of optimizing antenna beam shape of a directional antenna according to the present invention. In a first step S30, the antenna beam of the directional antenna is divided into at least a handover, main and interference (third) beam sector. The beam shape of these at least three beam sectors are then optimized based on different requirements. In the following steps S31 and S32, the handover beam sector is adjusted and optimized. These steps S31 and S32 correspond to steps S11 and S12 of Fig. 3 and are not discussed further. In the next step S33 the shape of the high intra-site interference beam sector is optimized by minimizing the angular interval of this beam sector. In other words, the received signal energy of the neighboring directional antenna should drop quickly per traveled distance within this interference beam sector in order to reduce the interference situation between the two direction antennas. In an alternative embodiment, in this step S33 the angular interval of the interference beam sector should be adjusted to be smaller than an angular interference threshold. In the final step S34, the shape of the main beam sector is optimized by maximizing the antenna gain in this beam sector similar to step S13 of Fig. 3. The method then ends.

Fig. 8 is a flow diagram illustrating additional steps of the optimization method of Fig. 7. These steps define the different beam sectors of the antenna beam. The method continues from step S30 of Fig. 7. In the next two steps S40 and S41 the handover beam sector portion of the antenna beam is defined. These steps correspond to steps S20 and S21 of Fig. 4 and are not further discussed. In step S42 the high intra-site interference beam sector is defined. The interference beam sector is defined as the portion of the antenna beam of the directional antenna outside of the handover beam sector and in which the received signal level of the antenna (measured by the directional antenna on data received from the mobile unit or measured by the mobile unit on data received from the antenna and reported to the antenna) and preferably of the neighboring directional antenna exceeds an interference impact level or threshold T_{I}. The value of this threshold T_{I} is selected so that the angular interval of the interference beam sector is as small as possible, with an interference impact level that gives small contribution to the interference levels in the radio communications system. The portion of the antenna beam outside of the handover and interference beam sectors is then defined as the main beam sector. The method then continues to step S31 of Fig. 7.

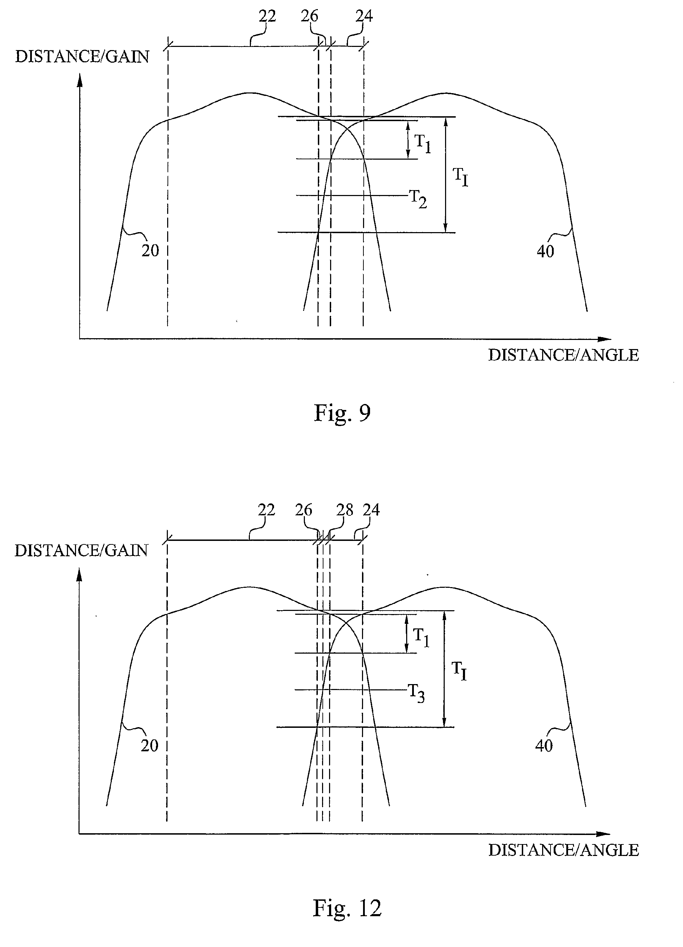

Fig. 9 is an illustration of an antenna diagram of antenna beams of neighboring directional antennas optimized according to the method discussed above in connection to Fig. 7. Thus, in this embodiment, the difference in received signal level between the first antenna beam 20 and the second antenna beam 40 is less than the first threshold T₁ in the handover beam sector 24. Furthermore, the levels of both beams 20, 40 are above the second threshold T₂. The high intra-site interference beam sector 26 is outside of the handover beam sector 24, where the received signal levels of preferably both beams 20, 40 are above the interference impact threshold T_{I}. The remaining portion of the antenna beam 20 besides the handover 24 and interference 26 beam sector is then defined as the main beam sector 22 (note that the antenna beam 20 can include two handover beam sectors 24, two interference beam sectors 26 and one main beam sector 22).

The values of the thresholds T₁ and T₂ are determined based on the handover parameter settings of the system (RBS or directional antenna) and should give sufficient time for the system to handle a handover of a mobile unit that is moving through the intra-site handover region, i.e. from one antenna beam 20 into the next antenna beam 40 of a same site or base station. Similar to above, the handover beam sector shape and handover parameter settings are preferably optimized so that the angular interval of the handover beam sector 24 is sufficiently large, i.e. larger than the threshold T_{ang1}, for a controlled handover of a moving mobile unit. In addition, the antenna gain in the handover beam sector 24 preferably exceeds the minimum threshold in order to provide adequate radio coverage within this beam sector 24. The value of T₁ is as small as possible, while the beam levels in this handover beam sector 24 are as high as possible over the value of T₂. The angular interval of the interference beam sector 26 is as small as possible, with an interference impact level T_{I} that gives a small contribution to the total interference levels in the system. Finally, the antenna gain in the main beam sector 22 is preferably maximized.

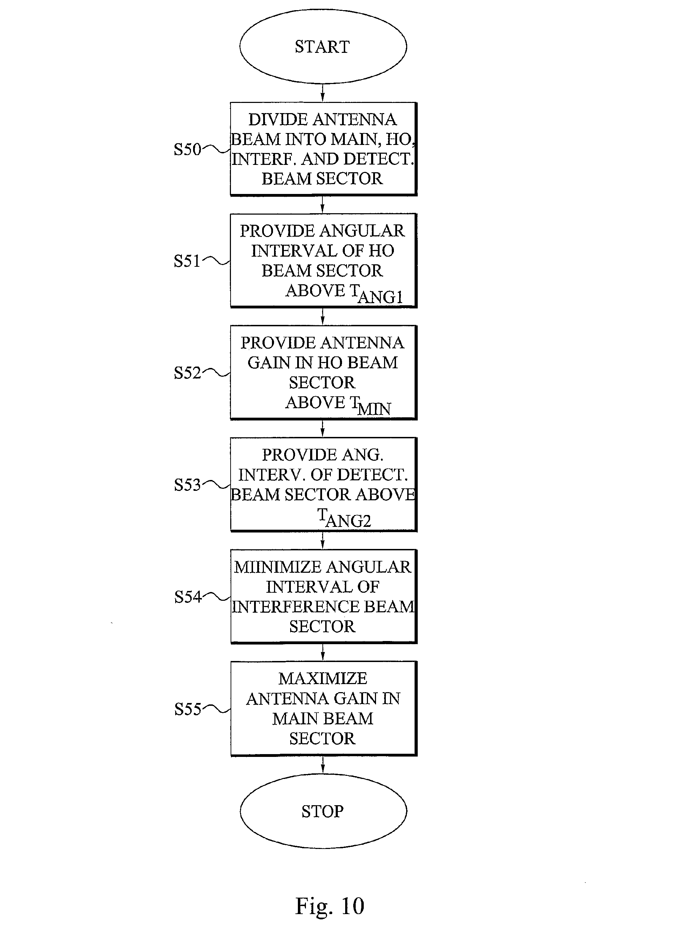

Fig. 10 is a flow diagram of a further embodiment of a method of optimizing the shape of the antenna beam for a directional antenna according to the present invention. In the first step S50, the antenna beam of the directional antenna is divided into at least a handover, interference, main and detection (fourth) beam sector. In the next steps S51 and S52, the shape of the handover beam sector is optimized. These steps correspond to steps S11 and S12 of Fig. 3 and are not discussed in more detail. The shape of the detection and handover preparation beam sector is then optimized in step S53. In this step S53, the angular interval of the detection beam sector is provided above a minimum second angular threshold T_{ang2}. This threshold T_{ang2} is selected so that the system can successfully detect and prepare a (intra-site or soft) handover procedure for a moving mobile unit. The following to steps S54 and S55 correspond to steps S32 and S12 of Fig. 7 and 3, respectively, and are not further discussed. The method then ends.

Fig. 11 is a flow diagram illustrating additional steps of the optimization method of Fig. 10. The method continues from step S50. The next step S60 corresponds to step S20 of Fig. 4. In the next step S61, the detection and handover preparation beam sector is defined as the portion of the antenna beam outside of the handover beam sector and in which the received signal level of the directional antenna and preferably of the neighboring directional antenna exceeds a third threshold T₃. The interference beam sector is defined as the portion of the antenna beam outside of the handover and detection beam sectors and in which the received signal level of the directional antenna and preferably of the neighboring directional antenna exceeds the interference impact threshold T_{I}. The remaining portion of the antenna diagram may then be defined as the main beam sector. The method thereafter continues to step S51 of Fig. 10.

Fig. 12 illustrates an antenna diagram of neighboring intra-site antenna beams optimized according to the embodiment of the invention discussed above in connection to Fig. 10. Fig. 13 illustrates an enlargement of a portion of the antenna diagram of Fig. 12. As is illustrated in the two figures, the difference in received signal level of the two antenna beams 20, 40 is less than the threshold T₁ in the handover beam sector 24. The detection and handover preparation beam sector 28 is outside of the handover beam sector 24 and the signal level of the antenna beams 20, 40 should be above a detection threshold T₃ within this beam sector 28. The high intra-site interference beam sector 26 is found outside of the detection beam sector 28. In this beam sector 26, the received signal levels of the antenna beams 20, 40 are preferably above the interference impact threshold T_{I}. Outside of the interference beam sector 26 is the main beam sector 22. Similar to the discussion above for Fig. 9, the antenna beam could be divided into one or two handover beam sectors 24, one or two detection beam sectors 28, one or two interference beam sectors 26 and one main beam sector 22 depending on if the directional antenna have one or two neighboring directional antennas in the base station. In this embodiment of the invention, the intra-site handover region between the two cells 20, 40 typically includes the handover beam sector 24 and the detection beam sector 28.

The value of the threshold T₁ is determined by the handover parameter settings of the system and should give sufficient time for completing a handover procedure of a mobile unit moving through the intra-site handover region. The threshold T₃ is also preferably determined based on the handover parameter settings. This threshold affects when detection of signal content should start in order to prepare for a possible handover procedure.

The angular interval for the handover beam sector 24 should be sufficiently large for a controlled handover of a moving mobile unit with efficient use of the preparation made in detection and handover preparation beam sector 28. Thus, the angular interval of the handover beam sector 24 exceeds the threshold T_{ang1}. The minimum antenna gain in the handover beam sector 24 preferably exceeds the threshold Tₘᵢₙ. The value of T₁ is as small as possible, while the received signal levels 20, 40 in the handover beam sector 24 are as high as possible. The angular interval for detection beam sector 28 is sufficiently large for a controlled detection and handover preparation of a mobile unit moving into the handover beam sector 24, i.e. preferably larger than the second angular threshold T_{ang2}, see Fig. 13. The value of T₃ is high enough to enable the directional antenna to correct detect of a signal from a mobile unit within this beam sector 28. Correspondingly, the angular interval of the interference beam sector 26 is as small as possible, with an interference impact level T_{I} that gives small contribution to the interference levels in the system. Thus, the received signal level from a mobile unit in the neighboring cell should drop quickly in this beam sector 26 and should be smaller then the threshold T_{I} outside this beam sector 26, i.e. in the main beam sector 22. Finally, the antenna gain in main beam sector 22 is maximized.

In the above-discussed embodiments of the invention, the antenna beam of a directional antenna has been divided into two, three or four different beam sectors with different requirements and the shape of the respective beam sectors have been optimized and adjusted using different parameters and objects. As the person skilled in the art understands, this principle can be applied also for a division of the antenna beam into more than four beam sectors.

The definition of multiple beam sectors of an antenna beam of a directional antenna according to the invention could be fixed. In such a case, once the antenna beam has been divided into multiple beam sectors this sub-sector definition is used during the following operation of the antenna. However, the actual sizes and shapes of the respective beam sectors could be changed, e.g. by adjusting the handover parameter settings and/or the other threshold values discussed above. It is anticipated by the invention that due to a change in the handover parameter settings, the values of some of the above discussed threshold values may change, which in turn can result in an increase and/or decrease of the antenna gain in the different beam sectors.

Alternatively, the sub-sector definition may be changed during operation, e.g. due to changes in the traffic situation, cell configuration and/or cell planning. In such a case, an initial division of the antenna beam into multiple beam sectors is first employed for a given directional antenna. Subsequently, another definition of multiple beam sectors could be employed. For example, in the initial beam sector definition the antenna is divided into a handover beam sector and a main beam sector. Thereafter, e.g. due to changes in the expected traffic situation in the cell, it could be more advantageous to divide the antenna beam into more different beam sectors, e.g. complementing the handover and main beam sector with an interference beam sector.

A same beam sector definition could be employed for all the directional antennas of site or base station. Alternatively, different beam sector definitions could be employed for different directional antenna, although they may be arranged next to each other in the base station and their respective antenna beams at least partly overlaps.

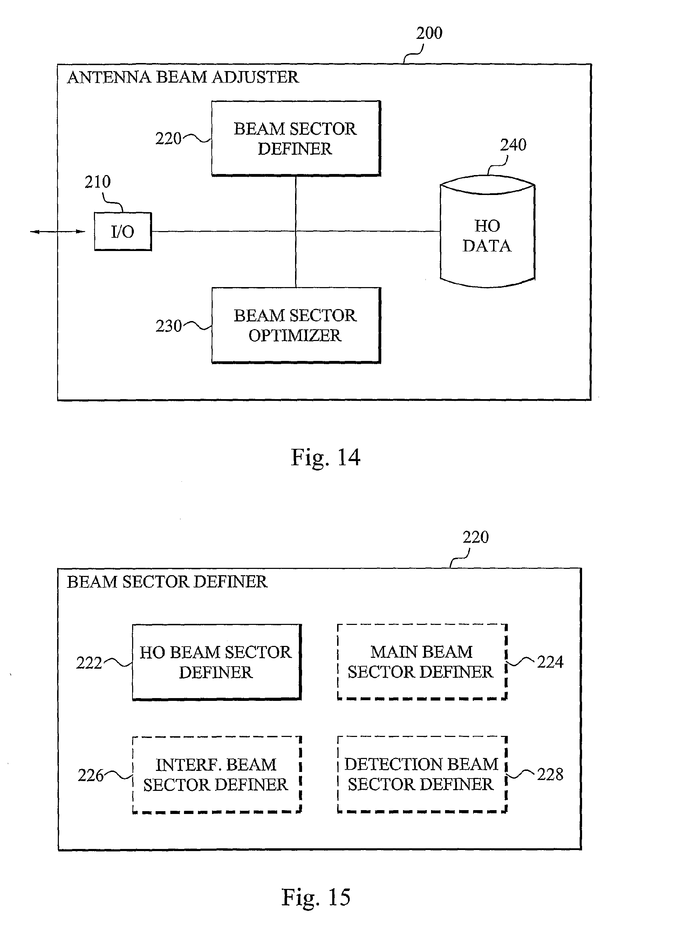

Fig. 14 is a schematic block diagram of an embodiment of an antenna beam adjusting unit or adjuster 200 according to the present invention. The antenna beam adjuster 200 generally includes an input and output (I/O) unit 210 for conducting communication with external units. This I/O unit 210 is in particular configured for receiving input data including handover parameter values and settings used in the communications system. These handover parameters can be received from any units in the system, which determine and/or store such parameters including a RNC or base station controller (BSC). When the I/O unit 210 receives such handover parameters it forwards them to a data memory 240 for storage. Furthermore, the I/O unit 210 is adapted for transmitting antenna beam optimization commands to directional antennas. Such commands then causes an adjustment of the beam sector shapes of the directional antenna.

The antenna beam adjuster 200 further includes a beam sector definer 220 that is configured for defining multiple beam sectors of the antenna beam of a directional antenna. In a first embodiment, the definer 220 is adapted for (virtually) dividing the antenna beam into at least a handover beam sector and a main beam sector. In another embodiment, at least a handover, high intra-site interference and main beam sector is defined by the beam sector definer 220. The definer 220 could alternatively define at least a handover, detection and handover preparation, high intra-site interference and main beam sector, or divide the antenna beam into more than four different beam sectors. The definer 220 could base its definition of beam sector on input data from other units in the system. Such input data could state that one and the same beam sector definition should be used for all directional antennas in the system, or alternatively different definitions could be employed for different antennas, e.g. if they are arranged in areas with different expected traffic conditions. Furthermore, the beam sector definition of a given antenna unit could be fixed or change over time, e.g. based on new input data. The definer 220 preferably bases the beam sector definitions on signal level threshold values, which in turn may be determined based on handover parameter settings or values. This threshold data may be retrieved from the data storage 240. Alternatively, the data storage 240 can be omitted. In such a case, the definer 220 preferably receives the information used in the beams sector definition process from an external unit in the system.

A beam sector optimizer 230 is arranged in the beam adjuster 200 for receiving information of the current beam sector definition from the definer 220. The optimizer 230 then determines how the beam sectors in the current definition should be adjusted or optimized. This optimizer 230 is configured for applying a differential shape optimization, where different requirements and objects are used for the different beam sectors. The optimizer 230 preferably bases such determination on the relevant handover parameter settings or values and other threshold values as found in the data storage 240 or provided from external units.

The optimizer 230 generates an adjustment command based on this determination, which is communicated via the I/O unit 210 to the relevant directional antenna. Such an adjustment command will then control operation of the directional antenna and causing the desired beam sector shapes. The adjustment command can provide the beam sector shape optimization by controlling an antenna adjusting unit that is arranged and connected to the directional antenna. Such adjusting unit could then mechanically adjust, e.g. move and/or rotate a mechanical structure in the antenna in response to the adjustment command in order to obtain the desired beam shape. Such mechanical structure can be the baffles around the antenna radiators, the ground plane behind the antenna radiators, and/or a structure that couples energy from the radiators, e.g. secondary radiators. If the directional antenna is a group antenna with multiple antenna units, the command can, alternatively or in addition, cause the desired beam shape by adjusting the relative amplitude and/or phase excitations of the antenna units. As the person skilled in the art understands, any procedure that results in an adjustment of the beam shape of an antenna could be used in order to cause the directional antenna to obtain an antenna beam shape according to the invention. As a result, the radio coverage area of the different beam sectors will be adjusted and optimized according to the different objectives discussed above. Such adjustment can, for example, result in increased or decreased antenna gain in a beam sector and/or increased or decreased angular interval of a beam sector.

The units 210 to 230 of the antenna beam adjuster 200 may be implemented as software, hardware or a combination thereof. The units 210 to 240 may all be implemented in the antenna beam adjuster 200 in a single network node in the communications system. For example, the adjuster 200 could be implemented in a radio base station and then manage beam shape operation of all the directional antennas in this base station. Alternatively, each directional antenna can be equipped with an antenna beam adjuster 200 according to the invention. In yet another embodiment, the adjuster 200 is implemented in a network node controlling beam shape operation of directional antennas in multiple base stations. A possible such node could be a radio network controller or base station controller of the communications system. However, a distributed implementation is also possible, with the units 210 to 240 provided in different network nodes.

Fig. 15 is a schematic block diagram of an embodiment of the beam sector optimizer 220 of Fig. 14. This definer 220 includes a handover beam sector definer 222 that is arranged for defining the handover beam sector portion of the antenna beam. This beam sector definer 222 is preferably configured for defining the handover beam sector as the portion of the antenna beam in which the difference in received signal level of the directional antenna and a neighboring directional antenna exceeds a first threshold value. Alternatively, or in addition, the received signal level is preferably above a second threshold within this beam sector. The values of the first and second threshold are determined based on handover parameter data e.g. as retrieved from the data storage.

An optional detection beam sector definer 228 preferably defines the detection beam sector as the portion of the antenna beam positioned outside of the handover beam sector in the antenna diagram and in which the received signal level of the directional antenna is above a third threshold.

An optional interference beam sector definer 226 preferably defines the detection beam sector as the portion of the antenna beam positioned outside of the handover and detection beam sector in the antenna diagram and in which the received signal level of the directional antenna is above an interference impact threshold.

The beam sector definer 220 preferably also includes a definer 224 for defining the main beam sector. This main beam sector is then preferably defined as the remaining portion of the antenna beam in addition to the handover beam sector and the optional detection and interference beam sectors.

The units 222 to 228 of the beam sector definer 220 may be implemented as software, hardware or a combination thereof. The units 222 to 228 may all be implemented in the beam sector definer 220. Alternatively, a distributed implementation is also possible with some or all units 222 to 228 implemented in the antenna beam adjuster.

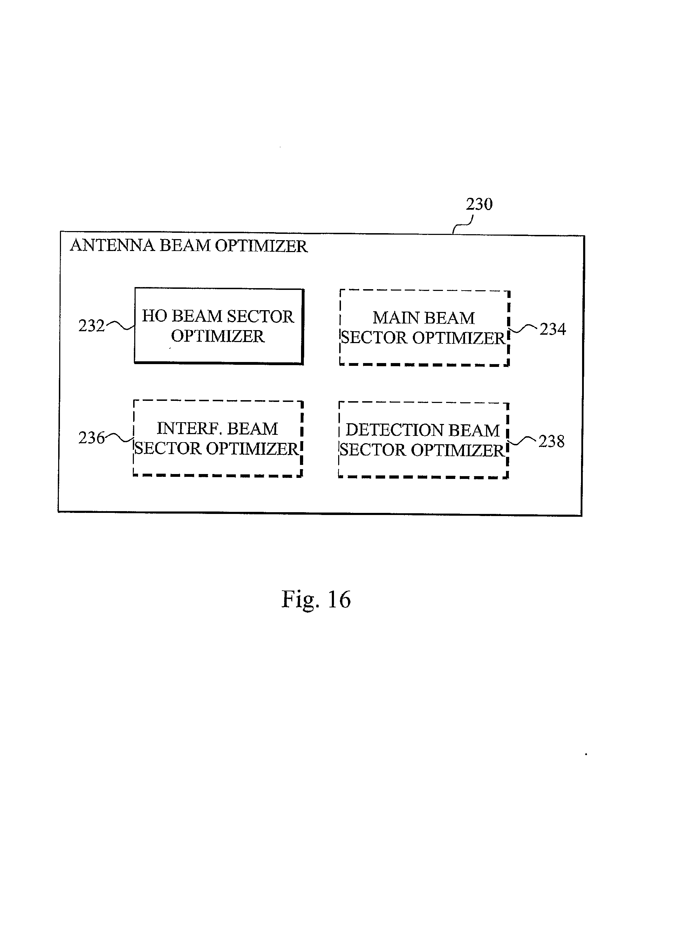

Fig. 16 is a schematic block diagram of an embodiment of the antenna beam optimizer 230 of Fig. 14. This optimizer 230 includes a handover beam sector optimizer 232 than is arranged for optimizing and adjusting the antenna beam portion(s) constituting the handover beam sector. This beam sector optimizer 232 is preferably configured for generating an adjustment command that causes a directional antenna to provide an angular interval or size of the handover beam sector above a first angular threshold. The value of the first angular threshold is determined based on handover parameter data e.g. as retrieved from the data storage. Alternatively, or in addition, the beam sector optimizer 232 generates a command causing the directional antenna to provide an antenna gain that exceeds a minimum gain threshold within the handover beam sector.

The antenna beam optimizer 230 preferably also includes an optimizer 234 for adjusting the beam shape of the main beam sector. This optimizer 234 preferably generates an adjustment command that causes the directional antenna to maximize the antenna gain in this main beam sector.

An optional interference beam sector optimizer 236 preferably generates a command controlling the directional antenna to minimize the angular interval or size of the interference beam sector.

The adjustment command from an optional detection beam sector optimizer 238 preferably adjusts the directional antenna to provide an angular interval or size of the detection beam sector above a second angular threshold..

The adjustment command of the antenna beam optimizer 230 preferably includes the respective commands from the relevant optimizers 232 to 238. Thus, if the definer has determined that the antenna beam of a given directional antenna is to be divided into a handover, interference and main beam sector, information from the units 232 to 236 is preferably included in the adjustment command in order to adjust the shape of all these three beam sectors.

The units 232 to 238 of the antenna beam optimizer 230 may be implemented as software, hardware or a combination thereof. The units 232 to 238 may all be implemented in the antenna beam optimizer 230. Alternatively, a distributed implementation is also possible with some or all units 232 to 238 implemented in the antenna beam adjuster.

It will be understood by a person skilled in the art that various modifications and changes may be made to the present invention without departure from the scope thereof, which is defined by the appended claims.

### REFERENCES

[1] 3GPP TS 25.922 V5.2.0; 3rd Generation Partnership Project; Technical Specification Group Radio Access Network; Radio resource management strategies; December 2003

## Claims

1. A method of optimizing antenna beam shape (20) of a first directional antenna (120) in a communications system (1), said method comprising the steps of:
- defining at least a handover beam sector (24) and a main beam sector (22) of the antenna beam (20) of said directional antenna (120);
- optimizing a shape of said handover beam sector (24) based on a handover parameter setting of said communications system (1); and
- optimizing a shape of said main beam sector (22) by maximizing the antenna gain of said first directional antenna (120) in said main beam sector (22).

2. The method according to claim 1, wherein said first directional antenna (120) is arranged in a base station (100) in said communications system (1) and said handover parameter setting is associated with said base station (100).

3. The method according to claim 1 or 2, wherein said optimizing step comprises providing an angular interval of said handover beam sector (24) over a first angular threshold (t_{ang1}) determined based on said handover parameter setting.

4. The method according to any of the claims 1 to 3, wherein said optimizing step comprises providing an antenna gain of said directional antenna (120) in said handover beam sector (24) that exceeds a minimum gain threshold (Tₘᵢₙ) determined based on said handover parameter setting.

5. The method according to claim 2, wherein base station (100) comprises a second directional antenna (140) and said antenna beam (20) of said first directional antenna (120) partly overlaps the antenna beam (40) of said second antenna (140).

6. The method according to claim 5, wherein said defining step comprises defining said handover beam sector (24) as a portion of said antenna beam (20) in which a difference in a received signal level associated with said first directional antenna (120) and a received signal level associated with said second directional antenna (140) is smaller than a first threshold value (T₁) determined based on said handover parameter setting.

7. The method according to claim 5 or 6, wherein said defining step comprises defining said handover beam sector (24) as a portion of said antenna beam (20) in which a received signal level of said first directional antenna (120) exceeds a second threshold value (T₂) determined based on said handover parameter setting.

8. The method according to any of the claims 1 to 7, wherein said defining step comprises dividing said antenna beam (20) into said handover beam sector (24), a main beam sector (22) and an interference beam sector (26).

9. The method according to any of the claims 1 to 8, wherein said defining step comprises dividing said antenna beam (20) into said handover beam sector (24), a main beam sector (22), an interference beam sector (26) and handover detection beam sector (28).

10. The method according to claim 8 or 9, further comprising the step of optimizing a shape of said interference beam sector (26) by minimizing an angular interval of said interference beam sector (26).

11. The method according to any of the claims 8 to 10, further comprising the step of defining said interference beam sector (26) as a portion of said antenna beam (20) outside of said handover beam sector (24) and in which received signal levels of said directional antenna and of a second neighboring directional antenna (140) exceed an interference impact threshold (T_{I}), said second directional antenna (140) being arranged in a same base station (100) as said first directional antenna (120).

12. The method according to claim 9, further comprising the step of optimizing a shape of said detection beam sector (28) by providing an angular interval of said detection beam sector (28) over a second angular threshold (T_{ang2}) determined based on said handover parameter setting.

13. The method according to claim 9 or 12, further comprising the step of defining said detection beam sector (28) as a portion of said antenna beam (20) outside of said handover beam sector (24) and in which a received signal level associated with said first directional antenna (120) exceeds a third threshold value (T₃) determined based on said handover parameter setting.

14. The method according to any of the claims 1 to 13, wherein said optimizing step comprises mechanically adjusting a mechanical structure of said first directional antenna (120) based on said handover parameter setting.

15. The method according to any of the claims 1 to 14, wherein said first directional antenna (120) is a group antenna comprising multiple antenna units and said optimizing step comprises at least one of:
- adjusting the amplitude excitations of said antenna units based on said handover parameter setting; and
- adjusting the phase excitations of said antenna units based on said handover parameter setting.

16. A system (200) for optimizing antenna beam shape (20) of a directional antenna (120) in a communications system (1), said system (200) comprising:
- means (220) for defining at least a handover beam sector (24) and a main beam sector (22) of the antenna beam (20) of said directional antenna (120);
- means (230) for optimizing a shape of said handover beam sector (24) based on a handover parameter setting of said communications system (1); and
- means (234) for optimizing a shape of said main beam sector (22) by maximizing the antenna gain of said directional antenna (120) in said main beam sector (22).

17. The system according to claim 16, wherein said directional antenna (120) is arranged in a base station (100) in said communications system (1) and said handover parameter setting is associated with said base station (100).

18. The system according to claim 16 or 17, wherein said optimizing means (230) comprises means (232) for providing an angular interval of said handover beam sector (24) over a first angular threshold (T_{ang1}) determined based on said handover parameter setting.

19. The system according to any of the claims 16 to 18, wherein said optimizing means (230) comprises means (232) for providing an antenna gain of said directional antenna (120) in said handover beam sector (24) that exceeds a minimum gain threshold (Tₘᵢₙ) determined based on said handover parameter setting.

20. The system according to claim 17, wherein base station (100) comprises a neighboring directional antenna (140) and said antenna beam (20) of said directional antenna (120) partly overlaps the antenna beam (40) of said neighboring antenna (140).

21. The system according to claim 20, wherein said defining means (220) comprises means (222) for defining said handover beam sector (24) as a portion of said antenna beam (20) in which a difference in a received signal level associated with said directional antenna (120) and a received signal level associated with said neighboring directional antenna (140) is smaller than a first threshold value (T₁) determined based on said handover parameter setting.

22. The system according to claim 20 or 21, wherein said defining means (222) is configured for defining said handover beam sector (24) as a portion of said antenna beam (20) in which a received signal level associated with said first directional antenna (120) exceeds a second threshold value (T₂) determined based on said handover parameter setting.

23. The system according to any of the claims 16 to 22, wherein said defining means (220) is configured for dividing said antenna beam (20) into said handover beam sector (22), a main beam sector (22) and an interference beam sector (26).

24. The system according to any of the claims 16 to 23, wherein said defining means (220) is configured for dividing said beam shape (20) into said handover beam sector (22), a main beam sector (22), an interference beam sector (26) and handover detection beam sector (28).

25. The system according to claim 23 or 24, further comprising means (236) for optimizing a shape of said interference beam sector (26) by minimizing an angular interval of said interference beam sector (26).

26. The system according to any of the claims 23 to 25, further comprising means (226) for defining said interference beam sector (26) as a portion of said antenna beam (20) outside of said handover beam sector (24) and in which received signal levels of said directional antenna (120) and of a neighboring directional antenna (140) exceed an interference impact threshold (T_{I}), said neighboring directional antenna (140) being arranged in a same base station (100) as said directional antenna (120).

27. The system according to claim 24, further comprising means (238) for optimizing a shape of said detection beam sector (28) by providing an angular interval of said detection beam sector (28) over a second angular threshold (T_{ang2}) determined based on said handover parameter setting.

28. The system according to claim 24 or 27, further comprising means (228) for defining said detection beam sector (28) as a portion of said antenna beam (20) outside of said handover beam sector (24) and in which a received signal level of said directional antenna (120) exceeds a third threshold value (T₃) determined based on said handover parameter setting.

29. The system according to any of the claims 16 to 28, wherein said optimizing means (230) is configured for mechanically adjusting a mechanical structure of said directional antenna (120) based on said handover parameter setting.

30. The system according to any of the claims 16 to 29, wherein said directional antenna (120) is a group antenna comprising multiple antenna units and said optimizing means (230) is configured for performing at least one of:
- adjustment of the amplitude excitations of said antenna units based on said handover parameter setting; and
- adjustment of the phase excitations of said antenna units based on said handover parameter setting.

31. A direction antenna (120) having an antenna beam (20), wherein a first sub-sector of said antenna beam (20) is defined as a handover beam sector (24) a second sub-sector of said antenna beam (20) is defined as a main beam sector (22) and a shape of said handover beam sector (24) is optimized based on a handover parameter setting of a communications system (1) in which said direction antenna (120) is arrangable and a shape of said main beam sector (22) is optimized by maximizing the antenna gain of said directional antenna (120) in said main beam sector (22).

## Patentansprüche

1. Ein Verfahren zur Optimierung einer Form eines Antennenstrahls (20) einer ersten Richtantenne (120) in einem Kommunikationssystem (1), das Verfahren umfassend die Schritte:
- Bestimmen zumindest eines Übergabestrahlensektors (24) und eines Hauptstrahlensektors (22) des Antennenstrahls (20) der Richtantenne (120);
- Optimieren einer Form des Übergabestrahlensektors (24) basierend auf einer Übergabeparametereinstellung des Kommunikationssystems (1); und
- Optimieren einer Form des Hauptstrahlensektors (22) durch Maximierung des Antennengewinns der ersten Richtantenne (120) in dem Hauptstrahlensektor (22).

2. Das Verfahren nach Anspruch 1, wobei die erste Richtantenne (120) in einer Basisstation (100) in dem Kommunikationssystem (1) angeordnet ist und die Übergabeparametereinstellung zu der Basisstation (100) zugehörig ist.

3. Das Verfahren nach Anspruch 1 oder 2, wobei der Optimierungsschritt das Bereitstellen eines Winkelintervalls des Übergabestrahlensektors (24) über einem ersten Winkelgrenzwert (T_{ang1}), der basierend auf der Übergabeparametereinstellung festgelegt ist, umfasst.

4. Das Verfahren nach einem der Ansprüche 1 bis 3, wobei der Optimierungsschritt das Bereitstellen eines Antennengewinns der Richtantenne (120) in dem Übergabestrahlensektor (24) umfasst, der einen minimalen Gewinngrenzwert (Tₘᵢₙ), der basierend auf der Übergabeparametereinstellung festgelegt ist, überschreitet.

5. Das Verfahren nach Anspruch 2, wobei Basisstation (100) eine zweite Richtantenne (140) umfasst und der Antennenstrahl (20) der ersten Richtantenne (120) teilweise den Antennenstrahl (40) der zweiten Antenne (140) überlappt.

6. Das Verfahren nach Anspruch 5, wobei der Bestimmungsschritt das Bestimmen des Übergabestrahlensektors (24) als einen Teil des Antennenstrahls (20) umfasst, in dem ein Unterschied eines empfangenen Signalpegels zugehörig zu der ersten Richtantenne (120) und eines empfangenen Signalpegels zugehörig zu der zweiten Richtantenne (140) kleiner ist als ein erster Grenzwert (T₁), der basierend auf der Übergabeparametereinstellung festgelegt ist.

7. Das Verfahren nach Anspruch 5 oder 6, wobei der Bestimmungsschritt das Bestimmen des Übergabestrahlensektors (24) als einen Teil des Antennenstrahls (20) umfasst, in dem ein empfangener Signalpegel der ersten Richtantenne (120) einen zweiten Grenzwert (T₂), der basierend auf der Übergabeparametereinstellung festgelegt ist, überschreitet.

8. Das Verfahren nach einem der Ansprüche 1 bis 7, wobei der Bestimmungsschritt das Unterteilen des Antennenstrahls (20) in den Übergabestrahlensektor (24), einen Hauptstrahlensektor (22) und einen Interferenzstrahlensektor (26) umfasst.

9. Das Verfahren nach einem der Ansprüche 1 bis 8, wobei der Bestimmungsschritt das Unterteilen des Antennenstrahls (20) in den Übergabestrahlensektor (24), einen Hauptstrahlensektor (22), einen Interferenzstrahlensektor (26) und einen Übergabeerkennungsstrahlensektor (28) umfasst.

10. Das Verfahren nach Anspruch 8 oder 9, weiterhin umfassend einen Schritt des Optimierens einer Form des Interferenzstrahlensektors (26) durch Minimierung eines Winkelintervalls des Interferenzstrahlensektors (26).

11. Das Verfahren nach einem der Ansprüche 8 bis 10, weiterhin umfassend einen Schritt des Bestimmens des Interferenzstrahlensektors (26) als einen Teil des Antennenstrahls (20) außerhalb des Übergabestrahlensektors (24) und in dem empfangene Signalpegel der Richtantenne und einer zweiten benachbarten Richtantenne (140) einen Interferenzeinflussgrenzwert (T_{I}) überschreiten, wobei die zweite Richtantenne (140) in derselben Basisstation (100) angeordnet ist wie die erste Richtantenne (120).

12. Das Verfahren nach Anspruch 9, weiterhin umfassend einen Schritt des Optimierens einer Form des Erkennungsstrahlensektors (28) durch Bereitstellen eines Winkelintervalls des Erkennungsstrahlensektors (28) über einem zweiten Winkelgrenzwert (T_{ang2}), der basierend auf der Übergabeparametereinstellung festgelegt ist.

13. Das Verfahren nach einem der Ansprüche 9 bis 12, weiterhin umfassend einen Schritt des Bestimmens des Erkennungsstrahlensektors (28) als einen Teil des Antennenstrahls (20) außerhalb des Übergabestrahlensektors (24) und in dem ein empfangener Signalpegel zugehörig zu der ersten Richtantenne (120) einen dritten Grenzwert (T3) überschreitet, der basierend auf der Übergabeparametereinstellung festgelegt ist.

14. Das Verfahren nach einem der Ansprüche 1 bis 13, wobei der Optimierungsschritt das mechanische Justieren einer mechanischen Konstruktion der ersten Richtantenne (120) basierend auf der Übergabeparametereinstellung umfasst.

15. Das Verfahren nach einem der Ansprüche 1 bis 14, wobei die erste Richtantenne (120) eine Antennengruppe ist, die eine Mehrzahl von Antenneneinheiten umfasst und der Optimierungsschritt zumindest umfasst:
- Justieren der Amplitudenerregungen der Antenneneinheiten basierend auf der Übergabeparametereinstellung; und
- Justieren der Phasenerregungen der Antenneneinheiten basierend auf der Übergabeparametereinstellung.

16. Ein System (200) zur Optimierung einer Form eines Antennenstrahls (20) einer Richtantenne (120) in einem Kommunikationssystem (1), das System (200) umfassend:
- Mittel (220) zum Bestimmen zumindest eines Übergabestrahlensektors (24) und eines Hauptstrahlensektors (22) des Antennenstrahls (20) der Richtantenne (120);
- Mittel (230) zum Optimieren einer Form des Übergabestrahlensektors (24) basierend auf einer Übergabeparametereinstellung des Kommunikationssystems (1); und
- Mittel (234) zum Optimieren einer Form des Hauptstrahlensektors (22) durch Maximierung des Antennengewinns der ersten Richtantenne (120) in dem Hauptstrahlensektor (22).

17. Das System nach Anspruch 16, wobei die Richtantenne (120) in einer Basisstation (100) in dem Kommunikationssystem (1) angeordnet ist und die Übergabeparametereinstellung zu der Basisstation (100) zugehörig ist.

18. Das System nach Anspruch 16 oder 17, wobei das Optimierungsmittel (230) Mittel (232) zum Bereitstellen eines Winkelintervalls des Übergabestrahlensektors (24) über einem ersten Winkelgrenzwert (T_{ang1}), der basierend auf der Übergabeparametereinstellung festgelegt ist, umfasst.

19. Das System nach einem der Ansprüche 16 bis 18, wobei das Optimierungsmittel (230) Mittel (232) zum Bereitstellen eines Antennengewinns der Richtantenne (120) in dem Übergabestrahlensektor (24) umfasst, der einen minimalen Gewinngrenzwert (Tₘᵢₙ), der basierend auf der Übergabeparametereinstellung festgelegt ist, überschreitet.

20. Das System nach Anspruch 17, wobei Basisstation (100) eine benachbarte Richtantenne (140) umfasst und der Antennenstrahl (20) der Richtantenne (120) teilweise den Antennenstrahl (40) der benachbarten Antenne (140) überlappt.

21. Das System nach Anspruch 20, wobei das Bestimmungsmittel (220) Mittel (222) zum Bestimmen des Übergabestrahlensektors (24) als einen Teil des Antennenstrahls (20) umfasst, in dem ein Unterschied eines empfangenen Signalpegels zugehörig zu der Richtantenne (120) und eines empfangenen Signalpegels zugehörig zu der benachbarten Richtantenne (140) kleiner ist als ein erster Grenzwert (T₁), der basierend auf der Übergabeparametereinstellung festgelegt ist.

22. Das System nach Anspruch 20 oder 21, wobei das Bestimmungsmittel (222) ausgeführt ist, zum Bestimmen des Übergabestrahlensektors (24) als einen Teil des Antennenstrahls (20), in dem ein empfangener Signalpegel der ersten Richtantenne (120) einen zweiten Grenzwert (T₂), der basierend auf der Übergabeparametereinstellung festgelegt ist, überschreitet.

23. Das System nach einem der Ansprüche 16 bis 22, wobei das Bestimmungsmittel (220) ausgeführt ist zum Unterteilen des Antennenstrahls (20) in den Übergabestrahlensektor (24), einen Hauptstrahlensektor (22) und einen Interferenzstrahlensektor (26).

24. Das System nach einem der Ansprüche 16 bis 23, wobei das Bestimmungsmittel (220) ausgeführt ist zum Unterteilen des Antennenstrahls (20) in den Übergabestrahlensektor (22), einen Hauptstrahlensektor (22), einen Interferenzstrahlensektor (26) und einen Übergabeerkennungsstrahlensektor (28).

25. Das System nach Anspruch 23 oder 24, weiterhin umfassend Mittel (236) zum Optimieren einer Form des Interferenzstrahlensektors (26) durch Minimierung eines Winkelintervalls des Interferenzstrahlensektors (26).

26. Das System nach einem der Ansprüche 23 bis 25, weiterhin umfassend Mittel (226) zum Bestimmen des Interferenzstrahlensektors (26) als einen Teil des Antennenstrahls (20) außerhalb des Übergabestrahlensektors (24) und in dem empfangene Signalpegel der Richtantenne (120) und einer benachbarten Richtantenne (140) einen Interferenzeinflussgrenzwert (T_{I}) überschreiten, wobei die benachbarte Richtantenne (140) in derselben Basisstation (100) angeordnet ist wie die Richtantenne (120).

27. Das System nach Anspruch 24, weiterhin umfassend Mittel (238) zum Optimieren einer Form des Erkennungsstrahlensektors (28) durch Bereitstellen eines Winkelintervalls des Erkennungsstrahlensektors (28) über einem zweiten Winkelgrenzwert (T_{ang2}), der basierend auf der Übergabeparametereinstellung festgelegt ist.

28. Das System nach Anspruch 24 oder 27, weiterhin umfassend Mittel (228) zum Bestimmen des Erkennungsstrahlensektors (28) als einen Teil des Antennenstrahls (20) außerhalb des Übergabestrahlensektors (24) und in dem ein empfangener Signalpegel zugehörig zu der Richtantenne (120) einen dritten Grenzwert (T3) überschreitet, der basierend auf der Übergabeparametereinstellung festgelegt ist.

29. Das System nach einem der Ansprüche 16 bis 28, wobei das Optimierungsmittel (230) ausgeführt ist, zum mechanischen Justieren einer mechanischen Konstruktion der Richtantenne (120) basierend auf der Übergabeparametereinstellung.

30. Das System nach einem der Ansprüche 16 bis 29, wobei die Richtantenne (120) eine Antennengruppe ist, die eine Mehrzahl von Antenneneinheiten umfasst und das Optimierungsmittel (230) ausgeführt ist zum Durchführen von zumindest:
- Justieren der Amplitudenerregungen der Antenneneinheiten basierend auf der Übergabeparametereinstellung; und
- Justieren der Phasenerregungen der Antenneneinheiten basierend auf der Übergabeparametereinstellung.

31. Eine Richtantenne (120) aufweisend einen Antennenstrahl (20), wobei ein erster Teilsektor des Antennenstrahls (20) definiert ist als ein Übergabestrahlensektor (24), ein zweiter Teilsektor des Antennenstrahls (20) definiert ist als ein Hauptstrahlensektor (22) und eine Form des Übergabestrahlensektors (24) optimiert ist basierend auf einer Übergabeparametereinstellung eines Kommunikationssystems (1), in dem die Richtantenne (120) anordnenbar ist, und eine Form des Hauptstrahlensektors (22) optimiert ist durch Maximierung des Antennengewinns der Richtantenne (120) in dem Hauptstrahlensektor (22).

## Revendications

1. Procédé d'optimisation de la forme de faisceau d'antenne (20) d'une première antenne directionnelle (120) dans un système de communications (1), ledit procédé comprenant les étapes consistant à :
- définir au moins un secteur de faisceau de transfert (24) et un secteur de faisceau principal (22) du faisceau d'antenne (20) de ladite antenne directionnelle (120) ;
- optimiser la forme dudit secteur de faisceau de transfert (24) sur la base d'un réglage des paramètres de transfert dudit système de communications (1) ; et
- optimiser la forme dudit secteur de faisceau principal (22) en maximisant le gain d'antenne de ladite première antenne directionnelle (120) dans ledit secteur de faisceau principal (22).

2. Procédé selon la revendication 1, dans lequel ladite première antenne directionnelle (120) est aménagée dans une station de base (100) dudit système de communications (1) et ledit réglage de paramètres de transfert est associé à ladite station de base (100).

3. Procédé selon la revendication 1 ou la revendication 2, dans lequel ladite étape d'optimisation comprend la fourniture d'un intervalle angulaire dudit secteur de faisceau de transfert (24) sur un premier seuil angulaire (T_{ang1}) déterminé sur la base dudit réglage de paramètres de transfert.

4. Procédé selon l'une quelconque des revendications 1 à 3, dans lequel ladite étape d'optimisation comprend la fourniture d'un gain d'antenne de ladite antenne directionnelle (120) dans ledit secteur de faisceau de transfert (24) qui dépasse un seuil de gain minimal (Tₘᵢₙ) déterminé sur la base dudit réglage de paramètres de transfert.

5. Procédé selon la revendication 2, dans lequel la station de base (100) comprend une seconde antenne directionnelle (140) et ledit faisceau d'antenne (20) de ladite première antenne directionnelle (120) chevauche en partie le faisceau d'antenne (40) de ladite seconde antenne (140).

6. Procédé selon la revendication 5, dans lequel ladite étape de définition comprend la définition dudit secteur de faisceau de transfert (24) en tant que partie dudit faisceau d'antenne (20) dans laquelle une différence entre un niveau de signal reçu associé à ladite première antenne directionnelle (120) et un niveau de signal reçu associé à ladite seconde antenne directionnelle (140) est plus petite qu'une première valeur de seuil (T₁) déterminée sur la base dudit réglage de paramètres de transfert.

7. Procédé selon la revendication 5 ou la revendication 6, dans lequel ladite étape de définition comprend la définition dudit secteur de faisceau de transfert (24) en tant que partie dudit faisceau d'antenne (20), dans lequel un niveau de signal reçu de ladite première antenne directionnelle (120) dépasse une seconde valeur de seuil (T₂) déterminée sur la base dudit réglage de paramètres de transfert.

8. Procédé selon l'une quelconque des revendications 1 à 7, dans lequel ladite étape de définition comprend la division dudit faisceau d'antenne (20) en dit secteur de faisceau de transfert (24), en secteur de faisceau principal (22) et en secteur de faisceau d'interférence (26).

9. Procédé selon l'une quelconque des revendications 1 à 8, dans lequel ladite étape de définition comprend la division dudit faisceau d'antenne (20) en dit secteur de faisceau de transfert (24), en secteur de faisceau principal (22), en secteur de faisceau d'interférence (26) et en secteur de faisceau de détection de transfert (28).

10. Procédé selon la revendication 8 ou la revendication 9, comprenant en outre l'étape d'optimisation de la forme dudit secteur de faisceau d'interférence (26) en minimisant un intervalle angulaire dudit secteur de faisceau d'interférence (26).

11. Procédé selon l'une quelconque des revendications 8 à 10, comprenant en outre l'étape de définition dudit secteur de faisceau d'interférence (26) en tant que partie dudit faisceau d'antenne (20) en dehors dudit secteur de faisceau de transfert (24) et dans lequel des niveaux de signaux reçus de ladite antenne directionnelle et d'une seconde antenne directionnelle voisine (140) dépassent un seuil d'impact d'interférence (T_{I}), ladite seconde antenne directionnelle (140) étant aménagée dans une même station de base (100) que ladite première antenne directionnelle (120).

12. Procédé selon la revendication 9, comprenant en outre l'étape d'optimisation de la forme dudit secteur de faisceau de détection (28) en fournissant un intervalle angulaire dudit secteur de faisceau de détection (28) sur un second seuil angulaire (T_{ang2}) déterminé sur la base dudit réglage de paramètres de transfert.

13. Procédé selon la revendication 9 ou la revendication 12, comprenant en outre l'étape de définition dudit secteur de faisceau de détection (28) en tant que partie dudit faisceau d'antenne (20) en dehors du secteur de faisceau de transfert (24) et dans lequel un niveau de signal reçu associé à ladite première antenne directionnelle (120) dépasse une troisième valeur de seuil (T₃) déterminée sur la base dudit réglage de paramètres de transfert.

14. Procédé selon l'une quelconque des revendications 1 à 13, dans lequel ladite étape d'optimisation comprend l'ajustement mécanique d'une structure mécanique de ladite première antenne directionnelle (120) sur la base dudit réglage de paramètres de transfert.

15. Procédé selon l'une quelconque des revendications 1 à 14, dans lequel ladite première antenne directionnelle (120) est une antenne de groupe comprenant de multiples unités d'antenne et ladite étape d'optimisation comprend au moins l'une des étapes consistant à :
- ajuster les excitations d'amplitude desdites unités d'antenne sur la base dudit réglage de paramètres de transfert ; et
- ajuster les excitations de phase desdites unités d'antenne sur la base dudit réglage de paramètres de transfert.

16. Système (200) pour optimiser la forme de faisceau d'antenne (20) d'une antenne directionnelle (120) dans un système de communications (1), ledit système (200) comprenant :
- des moyens (220) pour définir au moins un secteur de faisceau de transfert (24) et un secteur de faisceau principal (22) du faisceau d'antenne (20) de ladite antenne directionnelle (120) ;
- des moyens (230) pour optimiser la forme dudit secteur de faisceau de transfert (24) sur la base d'un réglage de paramètres de transfert dudit système de communications (1) ; et
- des moyens (234) pour optimiser la forme dudit secteur de faisceau principal (22) en maximisant le gain d'antenne de ladite antenne directionnelle (120) dans ledit secteur de faisceau principal (22).

17. Système selon la revendication 16, dans lequel ladite antenne directionnelle (120) est aménagée dans une station de base (100) dudit système de communications (1) et ledit réglage de paramètres de transfert est associé à ladite station de base (100).

18. Système selon la revendication 16 ou la revendication 17, dans lequel lesdits moyens d'optimisation (230) comprennent des moyens (232) pour fournir un intervalle angulaire dudit secteur de faisceau de transfert (24) sur un premier seuil angulaire (T_{ang1}) déterminé sur la base dudit réglage de paramètres de transfert.

19. Système selon l'une quelconque des revendications 16 à 18, dans lequel lesdits moyens d'optimisation (230) comprennent des moyens (232) pour fournir un gain d'antenne de ladite antenne directionnelle (120) dans ledit secteur de faisceau de transfert (24), qui dépasse un seuil de gain minimal (Tₘᵢₙ) déterminé sur la base dudit réglage de paramètres de transfert.

20. Système selon la revendication 17, dans lequel la station de base (100) comprend une antenne directionnelle voisine (140) et ledit faisceau d'antenne (20) de ladite antenne directionnelle (120) chevauche en partie le faisceau d'antenne (40) de ladite antenne voisine (140).

21. Système selon la revendication 20, dans lequel lesdits moyens de définition (220) comprennent des moyens (222) pour définir ledit secteur de faisceau de transfert (24) en tant que partie dudit faisceau d'antenne (20), dans lequel une différence entre un niveau de signal reçu associé à ladite antenne directionnelle (120) et un niveau de signal reçu associé à ladite antenne directionnelle voisine (140) est plus petite qu'une première valeur de seuil (T₁) déterminée sur la base dudit réglage de paramètres de transfert.

22. Système selon la revendication 20 ou la revendication 21, dans lequel lesdits moyens de définition (222) sont configurés pour définir ledit secteur de faisceau de transfert (24) en tant que partie dudit faisceau d'antenne (20), dans lequel un niveau de signal reçu associé à ladite première antenne directionnelle (120) dépasse une seconde valeur de seuil (T₂) déterminée sur la base dudit réglage de paramètres de transfert.

23. Système selon l'une quelconque des revendications 16 à 22, dans lequel lesdits moyens de définition (220) sont configurés pour diviser ledit faisceau d'antenne (120) en dit secteur de faisceau de transfert (22), en secteur de faisceau principal (22) et en secteur de faisceau d'interférence (26).

24. Système selon l'une quelconque des revendications 16 à 23, dans lequel lesdits moyens de définition (220) sont configurés pour diviser ladite forme de faisceau (20) en dit secteur de faisceau de transfert (22), en secteur de faisceau principal (22), en secteur de faisceau d'interférence (26) et en secteur de faisceau de détection de transfert (28).

25. Système selon la revendication 23 ou la revendication 24, comprenant en outre des moyens (236) pour optimiser la forme dudit secteur de faisceau d'interférence (26) en minimisant un intervalle angulaire dudit secteur de faisceau d'interférence (26).

26. Système selon l'une quelconque des revendications 23 à 25, comprenant en outre des moyens (226) pour définir ledit secteur de faisceau d'interférence (26) en tant que partie dudit faisceau d'antenne (20) en dehors dudit secteur de faisceau de transfert (24) et dans lequel des niveaux de signaux reçus de ladite antenne directionnelle (120) et d'une antenne directionnelle voisine (140) dépassent un seuil d'impact d'interférence (T_{I}), ladite antenne directionnelle voisine (140) étant aménagée dans une même station de base (100) que ladite antenne directionnelle (120).

27. Système selon la revendication 24, comprenant en outre des moyens (238) pour optimiser la forme dudit secteur de faisceau de détection (28) en fournissant un intervalle angulaire dudit secteur de faisceau de détection (28) sur un second seuil angulaire (T_{ang2}) déterminé sur la base dudit réglage de paramètres de transfert.

28. Système selon la revendication 24 ou la revendication 27, comprenant en outre des moyens (228) pour définir ledit secteur de faisceau de détection (28) en tant que partie dudit faisceau d'antenne (20) en dehors dudit secteur de faisceau de transfert (24) et dans lequel un niveau de signal reçu de ladite antenne directionnelle (120) dépasse un troisième niveau de seuil (T₃) déterminé sur la base dudit réglage de paramètres de transfert.

29. Système selon l'une quelconque des revendications 16 à 28, dans lequel lesdits moyens d'optimisation (230) sont configurés pour ajuster mécaniquement une structure mécanique de ladite antenne directionnelle (120) sur la base dudit réglage de paramètres de transfert.

30. Système selon l'une quelconque des revendications 16 à 29, dans lequel ladite antenne directionnelle (120) est une antenne de groupe comprenant de multiples unités d'antenne et lesdits moyens d'optimisation (230) sont configurés pour effectuer au moins l'une des opérations suivantes :
- l'ajustement des excitations d'amplitude desdites unités d'antenne sur la base dudit réglage de paramètres de transfert ; et
- l'ajustement des excitations de phase desdites unités d'antenne sur la base dudit réglage de paramètres de transfert.

31. Antenne directionnelle (120) ayant un faisceau d'antenne (20), dans laquelle un premier sous-secteur dudit faisceau d'antenne (20) est défini comme secteur de faisceau de transfert (24), un second sous-secteur dudit faisceau d'antenne (20) est défini comme secteur de faisceau principal (22) et une forme dudit secteur de faisceau de transfert (24) est optimisée sur la base d'un réglage de paramètres de transfert d'un système de communications (1), dans laquelle ladite antenne directionnelle (120) peut être aménagée et la forme dudit secteur de faisceau principal (22) est optimisée en maximisant le gain d'antenne de ladite antenne directionnelle (120) dans ledit secteur de faisceau principal (22).
